# EUROPÄISCHE PATENTSCHRIFT

(11) **EP 1 656 789 B1**
(45) Veröffentlichungstag und Bekanntmachung des Hinweises auf die Patenterteilung: **24.12.2008**
(21) Anmeldenummer: 04731024.8
(22) Anmeldetag: 04.05.2004
(51) Int. Cl.: H04M 7/00, H04Q 3/00

(54) **ABBAU VON VERBINDUNGEN IN KOMMUNIKATIONSNETZEN**
CALL RELEASE IN COMMUNICATION NETWORKS
DESACTIVATION DE LIAISONS DANS DES RESEAUX DE COMMUNICATION

(30) Priorität: 19.08.2003 DE 10338055
(43) Veröffentlichungstag der Anmeldung: 17.05.2006
(73) Patentinhaber: Nokia Siemens Networks GmbH & Co. KG, 81541 München (DE)
(72) Erfinder: TEGELER, Jürgen, 82377 Penzberg (DE)
(86) Internationale Anmeldenummer: PCT/EP2004/050700
(87) Internationale Veröffentlichungsnummer: WO 2005/020554

(56) Entgegenhaltungen:
- WO-A-01/15486
- WO-A-01/78331

## Beschreibung

In der Vergangenheit haben sich zwei wesentliche Typen von Kommunikationsnetzen zur Übermittlung von Informationen herausgebildet: Paketorientierte (Daten-) Netze und leitungsorientierte (Sprach-) Netze. Im Zuge der Konvergenz dieser beiden Netztypen haben sich konvergente (Sprach-Daten-) Netze herausgebildet. Durch Zusammenschluss dieser unterschiedlichen Netztypen entstehen hybride Netze, in denen der Gegenstand der vorliegenden Erfindung mit besonders schönen Vorteilen zum Einsatz kommt.

WO 01/15486 betrifft ein Verfahren sowie eine Vorrichtung zur Zuordnung einer Identifikation eines Anrufs zu einer Verbindung in einem multimedialen Paketnetzwerk. In diesem Sinne werden Ereignisse und optional Signale zu einem Protokoll, das von einem Media-Gateway Controller (MGC) verwendet wird, hinzugefügt, um ein Media Gateway anzusteuern. Die Ereignisse sowie Signale ermöglichen, dass ein Rufaufbau von einem MGC überwacht wird ohne dass aktiv der Rufaufbau abgewartet werden muss. Dabei wird ein Overhead vermieden, der in Verbindung mit der Verarbeitung eines Wartezustands anfallen würde.

Leitungsorientierte Netze - auch Sprachnetze oder Telephonnetze genannt - sind auf die Übermittlung von in der Fachwelt auch als Gespräch, Call oder Session bezeichneten kontinuierlich strömenden (Sprach-) Informationen ausgelegt. Die Übermittlung der Informationen erfolgt hierbei üblicherweise mit hoher Dienstgüte und Sicherheit. Beispielsweise ist für Sprache eine minimale - z.B. < 200 ms - Verzögerung (Delay) ohne Schwankungen der Verzögerungszeit (Delay-Jitter) wichtig, da Sprache bei Wiedergabe im Empfangsgerät einen kontinuierlichen Informationsfluss erfordert. Ein Informationsverlust kann deshalb nicht durch ein nochmaliges Übermitteln der nicht übermittelten Information ausgeglichen werden und führt im Empfangsgerät üblicherweise zu akustisch wahrnehmbaren Störungen (z.B. Knacksen, Verzerrung, Echo, Stille). In der Fachwelt wird die Übermittlung von Sprache verallgemeinert auch als Echtzeit-(Übermittlungs-)Dienst bzw. als 'Realtime-Service' bezeichnet.

Paketorientierte Netze - auch Datennetze genannt - sind auf die übermittlung von in der Fachwelt auch als 'Datenpaketströme' oder 'Flow' bezeichneten Paketströmen ausgelegt. Hierbei muss üblicherweise keine hohe Dienstgüte garantiert werden. Ohne garantierte Dienstgüte erfolgt die Übermittlung der Datenpaketströme z.B. mit zeitlich schwankenden Verzögerungen, da die einzelnen Datenpakete der Datenpaketströme üblicherweise in der Reihenfolge ihres Netzzugangs übermittelt werden, d.h. die zeitlichen Verzögerungen werden umso größer, je mehr Pakete von einem Datennetz zu übermitteln sind. In der Fachwelt wird die Übermittlung von Daten deshalb auch als Übermittlungsdienst ohne Echtzeitbedingungen bzw. als 'Non-Realtime-Service' bezeichnet.

Die Pakete unterscheiden sich üblicherweise je nach Art des paketorientierten Netzes. Sie können beispielsweise als Internet, X.25 oder Frame Relay Pakete, aber auch als ATM Zellen ausgebildet sein. Sie werden zuweilen auch als Nachrichten bezeichnet, v.a. dann, wenn eine Nachricht in einem Paket übermittelt wird.

Ein bekanntes Datennetz ist das Internet. Dieses wird wegen des dort zum Einsatz kommenden Internet Protokolls IP zuweilen auch IP Netz genannt, wobei dieser Begriff grundsätzlich weit zu verstehen ist und alle Netze umfasst, in denen das IP Protokoll eingesetzt wird. Das Internet ist als offenes (Weitverkehrs-) Datennetz mit offenen Schnittstellen zur Verbindung von (zumeist lokalen und regionalen) Datennetzen unterschiedlicher Hersteller konzipiert. Es stellt eine vom Hersteller unabhängige Transportplattform zur Verfügung.

Verbindungen sind Kommunikationsbeziehungen zwischen zumindest zwei Teilnehmern zum Zweck einer - zumeist gegenseitigen, d.h. bi-direktionalen - Informationsübermittlung. Der die Verbindung initiierende Teilnehmer wird üblicherweise als 'A-Teilnehmer' bezeichnet. Ein durch eine Verbindung mit einem A-Teilnehmer in Verbindung gesetzter Teilnehmer heißt 'B-Teilnehmer'. In einem verbindungslosen Netz repräsentieren Verbindungen zumindest die auf logisch abstrakter Ebene eindeutige Beziehung zwischen A- und B-Teilnehmer, d.h. entsprechend dieser Sichtweise stellen z.B. die verbindungslosen Flows im Internet logisch abstrahierte Verbindungen dar (z.B. A-Teilnehmer = Browser und B-Teilnehmer = Web Server). In einem verbindungsorientierten Netz repräsentieren Verbindungen zudem auf physikalischer Ebene eindeutige Wege durch das Netz, entlang denen die Informationen übermittelt werden.

Im Zuge der Konvergenz von Sprach- und Datennetzen werden Sprachübermittlungsdienste und zunehmend auch breitbandigere Dienste wie z.B. Übermittlung von Bewegtbildinformationen ebenfalls in paketorientierten Netzen realisiert, d.h. die Übermittlung der bisher üblicherweise leitungsorientiert übermittelten Echtzeitdienste erfolgt in einem konvergenten Netz - auch Sprach-Daten-Netz genannt - paketorientiert, d.h. in Paketströmen. Diese werden auch Echtzeitpaketströme genannt. Die Übermittlung von Sprachinformationen über ein paketorientiertes IP Netz wird dabei auch mit 'VoIP' (Voice over IP) gekennzeichnet.

In den internationalen Standardisierungsgremien IETF (Internet Engineering Task Force) und ITU (International Telecommunications Union) mehrere verteilte Architekturen für Sprach-Daten-Netze beschrieben. Allen ist gemeinsam, dass die Call Control Ebene und die Resource Control Ebene funktional deutlich voneinander getrennt sind und meist sogar auf unterschiedlichen Hardware Plattformen realisiert werden.

Die Call Control Ebene umfasst dabei zumindest einen (optionalen) Call Controller, dem u.a. folgende Funktionen zugeordnet sind:
- Address Translation: Umsetzung von E.164 Telephonnummern und anderen Alias Adressen (z.B. Rechnernamen) auf Transportadressen (z.B. Internetadressen).
- Admission Control (optional): Grundsätzliche Zulässigkeitsprüfung, ob und in welchem Umfang (z.B. VoIP fähige) Einrichtungen das Kommunikationsnetz nutzen dürfen.
- Bandwidth Control (optional): Verwaltung von Übermittlungskapazitäten.
- Zone Management: Registrierung von (z.B. VoIP fähigen) Einrichtungen und Bereitstellung obiger Funktionen für alle beim Call Controller registrierten Einrichtungen.

Optional können einem Call Controller zudem folgende Funktionen fallweise zugeordnet werden:
- Call Control Signaling: Alle Signalisierungsnachrichten werden von zumindest einem Call Controller vermittelt, d.h. alle Einrichtungen schicken und erhalten Signalisierungsnachrichten nur über den Call Controller. Ein direkter Austausch von Signalisierungsnachrichten zwischen den Einrichtungen ist untersagt.
- Call Authorization: Zulässigkeitsprüfung für eingehende und ausgehende Calls.
- Bandwidth Management: Steuerung der zulässigen Anzahl von Einrichtungen, die gleichzeitig das Kommunikationsnetz nutzen dürfen.
- Call Management: Verwaltung einer Liste bestehender Gespräche, um z.B. ein Besetzzeichen erzeugen zu können, falls dies von der Einrichtung selbst nicht erzeugt werden kann.
- Alias Address Modification: Rückgabe einer modifizierten Alias Adresse, bspw. mit einer H.225.0 Nachricht ACF (Admission Confirmation). Diese Adresse muss der Endpunkt bei Verbindungsaufbau verwenden.
- Dialed Digit Translation: Übersetzung der gewählten Ziffern in eine E.164 Telephonnummer oder eine Nummer aus einem privaten Nummerierungsschema.

Beispiele für Call Controller stellen der von der ITU in der H.323 Standard Familie vorgeschlagene 'Gatekeeper' oder der von der IETF vorgeschlagene 'SIP Proxy' dar. Wird ein größeres Kommunikationsnetz in mehrere Domänen - auch 'Zonen' genannt - gegliedert, kann in jeder Domäne ein separater Call Controller vorgesehen werden. Eine Domäne kann auch ohne einen Call Controller betrieben werden. Sind mehrere Call Controller in einer Domäne vorgesehen, soll nur ein einziger von diesen aktiviert sein. Ein Call Controller ist aus logischer Sicht getrennt von den Einrichtungen zu sehen. Physikalisch muss er jedoch nicht in einer separaten Call Controller Einrichtung realisiert sein, sondern kann auch in jedem Endpunkt einer Verbindung (beispielsweise ausgebildet als H.323 oder SIP Endpunkt, Endgerät, Media Gateway, Multipoint Control Unit) oder auch einer primär zur programmgesteuerten Datenverarbeitung ausgebildeten Einrichtung (beispielsweise: Rechner, PC, Server) vorgesehen werden. Auch eine physikalisch verteilte Realisierung ist möglich.

Ein alternatives Beispiel ist ein Media Gateway Controller, dem üblicherweise die optionalen Funktionen Call Control Signaling and Call Management zugeordnet werden. Weiterhin ist die Zuordnung einer Funktion Signaling Conversion zur Umsetzung unterschiedlicher (Signalisierung-) Protokolle denkbar, was z.B. an der Grenze von zwei unterschiedlichen Netzen, die zu einem hybriden Netz zusammengeschlossen sind, erforderlich sein kann.

Die Resource Control Ebene umfasst zumindest einen Resource Controller, dem u.a. folgende Funktionen zugeordnet sind:
- Capacity Control: Steuerung des dem Kommunikationsnetz durch Paketströme zugeführten Verkehrsvolumens, z.B. durch Kontrolle der Übermittlungskapazität einzelner Paketströme.
- Policy Activation (optional): ggf. für einen priorisierten Paketstrom Resourcen im Kommunikationsnetz für dessen Übermittlung reservieren.
- Priority Management (optional): Prioritätskennzeichen in den Paketen entsprechend der Priorität ihrer Paketströme setzen, kontrollieren und gegebenenfalls korrigieren, falls die Pakete bereits mit Prioritäten gekennzeichnet sind.

Der Resource Controller wird auch als 'Policy Decision Point (PDP)' bezeichnet. Er ist beispielsweise innerhalb von sog.

Edge Routern - auch Edge Device, Zugangsknoten oder bei Zuordnung zu einem Internet Service Provider (ISP) auch Provider Edge Router (PER) genannt - realisiert. Diese Edge Router können auch als Media Gateway zu anderen Netzen ausgebildet sein, mit denen die Sprach-Daten-Netze verbunden werden. Diese Media Gateway sind dann sowohl mit einem Sprach-Daten-Netz als mit den anderen Netzen verbunden und dienen intern der Umsetzung zwischen den unterschiedlichen (Übermittlungs-) Protokollen der verschiedenen Netze. Der Resource Controller kann auch nur als Proxy ausgebildet sein und Resource Controller relevante Informationen an eine separate Einrichtung weiterleiten, auf der die relevanten Informationen entsprechend einer Funktion des Resource Controllers bearbeitet werden.

Das prinzipielle Zusammenwirken der beiden Ebenen sei am Beispiel eines Call Setup zwischen zwei als Teilnehmerendgeräte ausgebildeten VoIP Einrichtungen erläutert. Dabei wird zunächst von einem homogenen Sprach-Daten-Netz ausgegangen.

Innerhalb oder teilweise auch zeitlich vor dem eigentlichen Call Setup laufen bei Einwahl eines Endgeräts in das IP-Netz (z.B. über einen Internet Service Provider) die Schritte Authentisierung, Autorisierung und (Start des) Accounting ab. Diese sogenannte 'AAA' Funktionalität wird üblicherweise durch den Zugriff auf eine Subscriber-Datenbank, in der alle Nutzer mit ihren Kennungen, Passwörtern, Rechten, etc. gespeichert sind, realisiert. Dieser Zugriff ist langsam und vergleichsweise komplex. In den heutigen "Best Effort" IP Netzen findet dieser AAA Vorgang normalerweise einmal während des Einwählens des Nutzers statt. Eine weitere Authentisierung erfolgt bei Einsatz eines Call Controllers, wenn sich das Endgerät beim Call Controller des Internet Service Providers registriert. Nach dem ITU-Standard H.323 wird diese Authentisierung bzw. Registrierung eines Endgeräts beim zugeordneten Gatekeeper gemäß dem RAS (Registration, Admission, Status) Protokoll durchgeführt, das im ITU-Standard H.225.0 beschrieben ist.

Der eigentliche Call Setup beginnt üblicherweise damit, dass in einem ersten Schritt die Endgeräte der Teilnehmer ihre Fähigkeiten (z.B. Liste der unterstützten CODEC) austauschen, um die benötigten Ressourcen (z.B. Bandbreite) und die geforderte QoS (z.B. Delay, Jitter) zu bestimmen. Die Endgeräte sind bei Sprachtelephonie z.B. als IP Telephone oder VoIP Client Software ausgebildet, bei Online-Video könnte eines der Endgeräte ein Content- bzw. Application-Server sein, z.B. im Netz des Internet Service Providers (ISP).

Der Austausch der Signalisierungsnachrichten erfolgt entweder direkt zwischen den Endgeräten oder unter Vermittlung eines Call Controllers. Hierbei ist bei jedem Call für jedes Endgerät und für jede Übertragungsrichtung individuell festgelegt, welche Variante zum Einsatz kommt. Die erste Variante wird in der H.323 Terminologie auch als 'Direct Endpoint Call Signaling' und die zweite als 'Gatekeeper Routed Call Signaling' bezeichnet. Bei Direct Endpoint Call Signaling können an einen Call Controller ggf. Kopien ausgewählter Signalisierungsnachrichten übermittelt werden, so dass ein Call Controller auch bei dieser Variante häufig Kenntnis von den zwischen den Endgeräten abgestimmten Ressourcen- und QoS-Anforderungen hat. Diese Anforderungen werden jedoch von ihm selbst nicht aktiv beeinflusst oder verifiziert.

In einem zweiten, optionalen Schritt kann die derart abgestimmte Ressourcen- und QoS-Anforderung direkt von den Endgeräten der Teilnehmer an ihren zugeordneten Resource Controller übermittelt werden. Nach Prüfung der Ressourcen- und QoS-Anforderung wird von dem Resource Controller eine Bestätigung (oder Ablehnung) an das Endgerät zurückgeschickt.

In einem dritten, ebenfalls optionalen Schritt wird im Edge Router und gegebenenfalls weiteren Routern im Netz eine Policy aktiviert, mit der diese Router prüfen und gewährleisten, dass der vom Endgerät verursachte Verkehr innerhalb der Grenzen liegt, die in der Anforderung spezifiziert wurden. Ein Beispiel für einen derartigen Reservierungsmechanismus ist RSVP (resource ReSerVation Protocol).

Zur Durchführung der drei Schritte wird eine Mehrzahl von Nachrichten versendet, die lediglich zur Abstimmung der beteiligten Komponenten untereinander, jedoch nicht zur Übermittlung der "eigentlichen" Informationen zwischen den Endgeräten dienen. Diese mit den Nachrichten übermittelten Informationen werden üblicherweise als Signalisierungsinformationen, Signalisierungsdaten bzw. schlicht als Signalisierung bezeichnet. Der Begriff ist dabei weit zu verstehen. So sind z.B. neben den Signalisierungsnachrichten auch die Nachrichten gemäß dem RAS Protokoll, die Nachrichten gemäß dem ITU-Standard H.245 zur Steuerung von Nutzkanälen bestehender Gespräche sowie alle weiteren ähnlich ausgebildeten Nachrichten umfasst. Das Signalisierungsprotokoll für den Verbindungsaufbau (Call Setup) und -abbau (Call Release) nach der ITU ist z.B. im Standard H.225.0 beschrieben, das nach der IETF im RFC 2453bis ("SIP: Session Initiation Protocol"). Die "eigentlichen Informationen" werden zur Unterscheidung von der Signalisierung auch Nutzinformationen, Payload, Medieninformationen, Mediendaten oder schlicht Medien genannt. Kommunikationsbeziehungen, die zur Übermittlung der Signalisierung dienen, werden im weiteren auch als Signalisierungsverbindungen bezeichnet. Die zur Übermittlung der Nutzinformationen eingesetzten Kommunikationsbeziehungen werden z.B. Sprechverbindung, Nutzkanalverbindung oder - vereinfacht - Nutzkanal, Bearerchannel oder schlicht Bearer genannt.

In diesem Zusammenhang versteht man unter out-of-band bzw. outband die Übermittlung von Informationen auf einem anderen Weg / Medium als den im Kommunikationsnetz zur Übermittlung von Signalisierungs- und Nutzinformationen vorgesehenen. Insbesondere ist hiervon eine lokale Konfiguration von Einrichtungen vor Ort umfasst, die z.B. mit einer lokalen Steu ereinrichtung vorgenommen wird. Demgegenüber werden bei inband Informationen auf dem gleichen Weg / Medium, ggf. logisch getrennt von den betrachteten Signalisierungs- und Nutzinformationen, übermittelt.

Zusammenfassend kann der Function Split zwischen den beiden Ebenen so beschrieben werden, dass der Resource Control Ebene lediglich die Funktionen zugeordnet sind, die zur Übermittlung von Nutzinformationen erforderlich sind, während von der Call Control Ebene die Intelligenz zur Steuerung der Resource Control Ebene umfasst ist. Mit anderen Worten: Die Einrichtungen der Resource Control Ebene besitzen möglichst keine Netzsteuerungsintelligenz und können in der Folge wirtschaftlich besonders vorteilhaft auf separaten Hardware Plattformen realisiert werden. Dies ist wegen der im Vergleich zu Call Control Ebene höheren Installationszahlen in dieser Ebene ein besonders schöner Vorteil.

Sowohl in konvergenten Sprach-Daten-Netzen als auch in hybriden Netzen, die z.B. durch einen Zusammenschluss eines konvergenten Sprach-Daten-Netzes mit einem konventionellen leitungsorientierten Sprachnetz gebildet werden, entstehen bei der Übermittlung von Informationen - insbesondere der in Echtzeitpaketströmen - neue technische Problemstellungen aufgrund der neuen bzw. unterschiedlichen Technologien, die in den jeweiligen Netztypen zum Einsatz kommen.

Es ist Aufgabe der Erfindung, zumindest eines dieser Probleme zu erkennen und durch Angabe von zumindest einer Lösung den Stand der Technik zu bereichern.

Die Erfindung stellt sich die Frage, wie in einem Netz, in dem die Call Control und die Resource Control Ebene deutlich (meist physikalisch) voneinander getrennt und lediglich lose, z.B mit einem Steuerungsprotokoll (z.B. H.248 oder MGCP = Media Gateway Control Protocol) miteinander verbunden sind, auf einen Fehler in der Call Control Ebene reagiert werden soll, wenn der Fehler Auswirkungen auf die Resource Control Ebene hat. In einem Netz ohne deutlich Entkopplung dieser beiden Ebenen führt ein derartiger Fehler infolge der integrierten Hardware Plattform üblicherweise automatisch zu einer Folgereaktion in der Resource Control Ebene (z.B. zum Ausfall einer Übertragungsstrecke). Diese Folgereaktion tritt jedoch bei (physikalischer) Verteilung der beiden Ebenen nicht mehr automatisch ein. So können insbesondere bei Ausfall der Hardware Plattform eines Media Gateway Controllers weiterhin von den ihm zugeordneten Media Gateways Informationen weiter übermittelt werden, weil deren isolierte Hardware Plattform weiterhin voll funktionsfähig ist. Eine Änderung tritt erst dann ein, wenn durch einen entsprechenden Steuerbefehl eine adäquate Folgereaktion im Media Gateway ausgelöst wird, z.B. indem durch eine Nachricht MGCP:DLCX oder H.248:ServiceChange die Übermittlung von (Nutz-) Informationen durch Auslösen der (Bearer-) Verbindung beendet wird.

Somit stellt sich für die vorliegende, verteilte Architektur die prinzipielle Frage, ob - und wenn ja - wie stark ein Fehler in der Call Control Ebene die Resource Control Ebene in Mitleidenschaft ziehen soll. Ist die Kopplung der beiden Ebenen zu gering, hat man Probleme mit der Datenkonsistenz (z.B. in der Call Control Ebene liegt ein falsches Abbild der Zustände in der Resource Control Ebene vor; Vergebührung läuft trotz Bearer Ausfall weiter). Ist die Kopplung zu stark (z.B. ein Ausfall einer Einrichtung der Call Control Ebene führt auch zu einem gleichwertigen Ausfall der zugehörigen Einrichtungen der Resource Control Ebene), dann hat man unnötig lange Ausfallzeiten und unnötige Risiken beim Wiederanlauf des Netzes.

Die Wirkung eines Steuerbefehls ist dabei im Rahmen des eingangs beschriebenen Function Splits der zweigeteilten Architektur rein lokal auf die jeweils angesprochene Einrichtung (z.B. Media Gateway) begrenzt. Als Konsequenz dieser modularen Philosophie ist ein entsprechender Steuerbefehl an jede derart gesteuerte Einrichtung der Resource Control Ebene entlang einer Verbindung erforderlich, um ein vollständiges Auslösen der Verbindung zu erreichen.

Dies kann allerdings zu Problemen bei der Vergebührung der Verbindung führen, weil die (Bearer-) Verbindung bereits nach dem ersten Steuerbefehl nicht mehr für eine end-to-end Übermittlung von Informationen zwischen Teilnehmern benutzt werden kann, wenn der von diesem Befehl betroffene Media Gateway die derart ausgelöste Verbindung nicht mehr kennt und die Gateway Funktion nicht mehr ausübt. Die Vergebührung muss folglich möglichst zeitgleich mit dem ersten erfolgreichen Steuerbefehl beendet werden und darf nicht erst dann enden, wenn die Verbindung in dem Knoten ausgelöst wird, in dem auch die Vergebührung der Verbindung durchgeführt wird.

Es ist in leitungsorientierten TDM (Time Devision Multiplex) Netzen bekannt, nach Ausfall eines TDM Vermittlungsknotens alle PCM (Pulse Code Modulation) Strecken physikalisch zu deaktivieren. Dies wird von der Hardware Maintenance der benachbarten TDM Vermittlungsknoten nach einigen Sekunden Verzögerungszeit erkannt und an ihre interne Steuerung gemeldet. Diese Steuerung ermittelt daraufhin die von dem Ausfall betroffenen Verbindungen und signalisiert mit Hilfe von SS7 Nachrichten an alle betroffenen Vermittlungsknoten des TDM Netzes den Ausfall der Verbindungen. Auf Grund dieser Nachrichten wird die Vergebührung der Verbindungen zeitnah zu dem initialen Ausfall des ersten Vermittlungsknotens beendet.

Dieses Verfahren funktioniert jedoch in einem hybriden Netz, bestehend aus einem paketorientierten Netz und einem leitungsorientierten TDM Netz, nicht mehr, weil in einem Media Gateway die PCM Strecken, in denen die Bearer im TDM Netz geführt werden, auch nach Auslösen einer Verbindung weiterhin physikalisch aktiv bleiben. Somit können die benachbarten (i.S.v. entlang der im Media Gateway ausgelösten Verbindung) TDM Vermittlungsknoten, die die betroffenen PCM Strecken terminieren, anhand der PCM Strecken - d.h. auf der Resource Control Ebene - nicht erkennen, dass der end-to-end Bearer über diese Strecken ausgefallen ist.

Dieses Verhalten ist gemäß dem Function Split der zweigeteilten Architektur die erwartete Lösung, weil die Signalisierung korrekterweise auf der Call Control Ebene erfolgen soll und nicht auf der Resource Control Ebene. Demnach wird der Ausfall des Bearers den benachbarten TDM Knoten grundsätzlich über die Call Signalisierung (SS7) - d.h. auf der Call Control Ebene - mitgeteilt, weil die Intelligenz zur Steuerung des Netzes dieser Ebene zugeordnet ist.

Die architekturkonforme Standardlösung führt jedoch im Falle einer Fehlerhäufung - z.B. als Folge eines High Level Recovery eines Media Gateway Controllers - zu einer Vielzahl von Problemen, weil nicht garantiert werden kann, dass die Signalisierung des Bearer Ausfalls zu benachbarten TDM Knoten synchron zum tatsächlichen Ausfall stattfindet:
- Wenn ein Media Gateway Controller ein High Level Recovery durchläuft, müssen üblicherweise alle noch bestehenden Nutzkanalverbindungen in den von dem Controller gesteuerten Media Gateways ausgelöst werden, damit nach Abschluss des Recovery im Controller wieder ein konsistentes Abbild der Zustände der zugeordneten Gateways vorliegt. Solange dieses Abbild nicht vorliegt, können vom Controller in den Gateways keine neuen Verbindungen erzeugt werden. Das Auslösen muss deshalb so schnell als möglich erfolgen, um die Zeitspanne, in der keine neuen Verbindungen erzeugt werden können, so gering wie möglich zu halten. Aus diesem Grund wird während des Recovery des Controllers das Protokoll zur Steuerung der Gateways möglichst frühzeitig wieder aktiviert, um die noch bestehenden transienten Verbindungsdaten in den Gateways löschen zu können. Mit dem Löschen einer Verbindung wird die bis dahin noch bestehende end-to-end Verbindung unterbrochen. Folglich sollte ab diesem Zeitpunkt auch die Vergebührung beendet werden. Dazu müssten - wie oben beschrieben - entsprechende Signalisierungsnachrichten auf der Call Control Ebene gesendet werden. Dies ist jedoch nicht möglich, weil die hierfür erforderlichen Protokolle (z.B. BICC, SIP T, SS7) zu diesem Zeitpunkt noch gar nicht aktiviert sind. Es muss also bis zu deren Aktivierung gewartet werden, was zu einem Versatz von mehreren Minuten zwischen der Unterbrechung der end-to-end Verbindung und der Beendung der Vergebührung führen kann.
- Bei einem großen Controller ergibt sich zudem ein Skalierungsproblem, weil das Auslösen einer Vielzahl von Verbindungen zu einer Flut von Signalisierungsnachrichten führt. In Abhängigkeit von der Implementierung des Controllers, seiner Größe und der allgemeinen Verkehrslast im Signalisierungsnetz wird deshalb der Versatz zwischen dem Ausfall des Bearers und der Beendigung der Vergebührung unkalkulierbar vergrößert und kann 30 min und mehr betragen. Dieses Auflaufen von nicht gerechtfertigten Gebühren ist nicht akzeptabel.

Eine Lösung für diese der Erfindung zugrunde liegende Problemsituation ist in den Patentansprüchen angegeben.

Mit dieser Lösung sind eine Vielzahl von Vorteilen verbunden:
- Die Lösung ist konform mit den Standards MGCP / H.248, weil das genormte Mindestverhalten auf einen Steuerbefehl aus der Call Control Ebene lediglich erweitert, aber nicht verändert wird.
- Infolge dieser Konformität sind lediglich minimale Änderungen an bestehenden Einrichtungen erforderlich, um die Erfindung zu implementieren, wodurch sie wirtschaftlich sehr vorteilhaft realisiert werden kann.
- Durch die Mitteilung an zumindest einen Netzknoten entlang der Verbindung wird die logische Kopplung zwischen den beiden verteilt realisierten Ebenen verstärkt, wodurch die beschriebenen Inkonsistenzen (Bearer nicht mehr verfügbar - Gebührenzählung läuft weiter) leichter vermeiden werden können.
- Durch die Miteilung auf der Resource Control Ebene wird das Skalierungsproblem signifikant entschärft, weil die Signalisierungsnachrichten an diese Netzknoten entfallen können.
- Das Problem des Zeitversatzes bei einem High Level Recovery eines Controllers wird entschärft, da die Mitteilung auf der Resource Control Ebene in unmittelbarer zeitlicher Nähe zu dem Auslösen der Verbindung erfolgen kann, ohne dass auf eine Aktivierung entsprechender Protokolle der Call Control Ebene gewartet werden müsste. Auch können die Mitteilung parallelisiert von den Prozessoren auf den Baugruppen erzeugt werden, wenn unterschiedliche Baugruppen bet von den Steuernachrichten betroffen sind. Dies ist effektiver als das meist zwangs-sequentialisierte Versenden von Signalisierungsnachrichten durch einen zentralisierten Controller.
- Im Fall eines High Level Recoveries eines Media Gateway Controllers, von dem eine Zusammenschaltung mit einem TDM Netz bewirkt wird, führt eine Mitteilung an einen benachbarten TDM Vermittlungsknoten (z.B. durch Ausfall bzw. Wiederinbetriebnahme von PCM Strecken) auf der TDM Seite zu ISUP Synchronisationsnachrichten (GRS/RSC) von dem TDM Vermittlungsknoten zu dem das Recovery durchlaufenden Controller, welche bei Nichtbeantwortung zyklisch wiederholt werden. Der Recovery durchlaufende Controller beginnt ab einem gewissen Punkt seines Recoveries, selbst GRS/RSC Nachrichten zu senden und die empfangenen zu quittieren. Dadurch, dass benachbarte TDM Vermittlungsknoten die Ar beit der ISUP Synchronisation nach Recovery des Controllers mit übernehmen, wird nicht nur der Recovery durchlaufende Controller dynamisch entlastet, sondern die Synchronisation auch schneller abgeschlossen und damit die vermittlungstechnisch volle Verfügbarkeit des Controllers früher wieder erreicht.

Weitere vorteilhafte Ausgestaltungen der Erfindung ergeben sich aus den unter- oder nebengeordneten Ansprüchen.

Bei Mitteilung durch Ausfall (z.B. Deaktivierung) eines Übermittlungskanals an einen Vermittlungsknoten eines leitungsorientierten Netzes wird der Ausfall - sofern er lange genug andauert (z.B. einige Sekunden) - von der Hardware Überwachung des Knotens erkannt. Dieser Knoten veranlasst daraufhin das beiderseitige Auslösen des TDM Bearers in dem leitungsorientierten Netz. Sofern in diesem Netz die Vergebührung erfolgt (z.B. wenn der Knoten in einem ingress-seitigen leitungsorientierten Netz angeordnet ist, dem auch der zu vergebührende Teilnehmer zugeordnet ist), wird auch diese gestoppt. Der Ausfall des Übermittlungskanals betrifft vorteilhaft keine Verbindungen, die nicht ausgelöst werden sollten, wenn (wie z.B. bei einem High Level Recovery des Controllers der Fall) alle Verbindungen in den zugeordneten Gateways ausgelöst werden. Infolge der in dem leitungsorientierten Netz bestehenden, bewährten Auslösemechanismen erfolgt diese Beendigung der Vergebührung zeitnah zu der Unterbrechung des end-to-end Bearers im Media Gateway. Im Fall eines High Level Recovery eines Media Gateway Controllers wird auf diese Weise die Gebührenzählung zeitnah zum Ausfall des Bearers gestoppt und nicht durch das Recovery verzögert.

Durch Mitteilung mit Hilfe von speziellen Nachrichten - insbesondere durch Inband Senden von RTCP Paketen, mit denen eine Information "Packet Loss = 100 %" angezeigt wird - wird in einem paketorientierten Netz der Ausfall eines Übermittlungskanals simuliert, so dass der eigentliche Übermittlungs kanal vorteilhaft weiterhin aktiv bleiben und für andere Informationsübermittlungen genutzt werden kann.

Für den Fall, dass das Gateway, dem das Auslösen einer Verbindung mit Hilfe von speziellen Nachrichten mitgeteilt wird, mit einem leitungsorientierten Netz zusammengeschaltet ist, wird das Auslösen zu dem leitungsorientierten Netz weitergemeldet, so dass die Vergebührung in diesem Netz möglichst zeitnah gestoppt werden kann.

Sofern diese Weitermeldung nicht durch Ausfall des Übermittlungskanals, sondern durch Meldung an den zugeordneten Controller und dann auf der Call Control Ebene übermittelt wird, werden vorteilhaft andere Verbindungen, die auch in den Übermittlungskanälen zu dem leitungsorientierten Netz übermittelt werden, nicht unterbrochen. Zudem wird auf diese Weise so schnell als möglich zu der architekturkonformen Signalisierung auf der Call Control Ebene zurückgekehrt. Außerdem erfolgt diese Rückkehr verteilt auf mehrere Controller, die ihrerseits kein Recovery durchlaufen, so dass eine sehr effektive Verteilung der Signalisierungslast bewirkt wird, die bei architekturkonformer Signalisierung ansonsten alleinig von dem Controller zu tragen wäre, der neben der fehlenden Lastverteilung zudem während seines Recovery sowieso keine ausreichenden Resourcen zur Bearbeitung dieser Signalisierung zur Verfügung hat.

Die Erfindung wird im folgenden anhand von weiteren Ausführungsbeispielen, die auch in den Figuren dargestellt sind, erläutert. Dabei zeigt:
- Figur 1: eine Anordnung zur Durchführung des erfindungsgemäßen Verfahrens mit einem hybriden Kommunikationsnetz, bestehend aus einem paketorientierten integrierten Sprach-Daten-Netz und zwei leitungsorientierten Sprachnetzen, die durch zwischengeschalteten Media Gateways und Media Gateway Controllern verbunden sind, sowie zwei Endpunkten einer Informationsübermittlung
- Figur 2: die Anordnung nach Figur 1, in der ingress-seitige Ausgestaltungen des erfindungsgemäßen Verfahrens exemplarisch aufgezeigt sind
- Figur 3: die Anordnung nach Figur 1, in der egress-seitige Ausgestaltungen des erfindungsgemäßen Verfahrens exemplarisch aufgezeigt sind

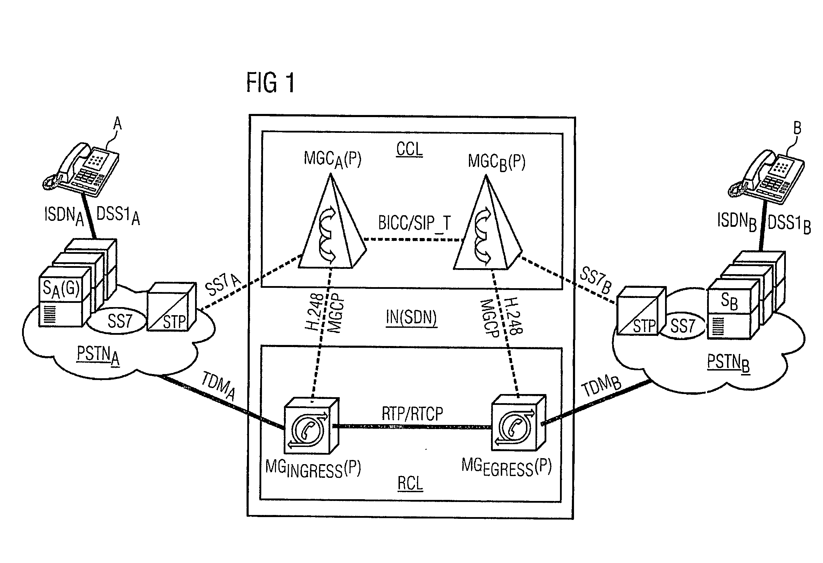

In Figur 1 ist eine beispielhafte Anordnung zur Durchführung des erfindungsgemäßen Verfahrens dargestellt. Sie umfasst zwei leitungsorientierte Netze PSTN_{A}, PSTN_{B} und ein Kommunikationsnetz IN, das vorzugsweise als integriertes Sprach-Daten-Netz SDN ausgebildet ist. Die drei Netze sind zu einem hybriden Netz zusammengeschlossen, in dem das Netz IN insbesondere zum Virtual Trunking von Sprachverbindungen zwischen den Netzen PSTN eingesetzt wird. Das Netz IN ist vorzugsweise als ein IP Netz (z.B. das Internet) ausgebildet. Für den einschlägigen Fachmann ist dabei offensichtlich, dass die Erfindung selbstverständlich in anderen Netzszenarien, insbesondere weiteren paketorientierten Netzen zum Einsatz kommen kann wie z.B. Intranet, Extranet, einem lokalen Netz (Local Area Network - LAN) oder einem, z.B. als Virtuelles Privates Netz (VPN) ausgebildeten firmeninternen Netz (Corporate Network).

Das Netz IN umfasst eine Call Control Ebene CCL, der die Controller MGC zugeordnet sind, und eine Resource Control Ebene RCL, der die Media Gateways MG zugeordnet sind. Die Gateways MG werden jeweils von einem ihnen zugeordneten Controller MGC durch ein - vorzugsweise international genormtes - Protokoll, z.B. MGCP (Media Gateway Control Protocol) oder H.248 gesteuert und sind üblicherweise als separate Einheit realisiert, die auf anderen physikalischen Einrichtungen / Hardware Plattformen zum Ablauf kommen als die Controller MGC.

Der Zusammenschluss der leitungsorientierten Bearer TDM_{A}, TDM_{B} wird durch zwischengeschaltete Media Gateways MG zur Konvertierung zwischen unterschiedlichen, netzspezifischen Nutzkanaltechnologien RTP/RTCP (Real Time [Control] Protocol) und TDM (Time Devision Multiplex) und der Zusammenschluss der leitungsorientierten Signalisierungskanäle SS7_{A}, SS7_{B} durch zwischengeschaltete Media Gateway Controller MGC zur Konvertierung zwischen unterschiedlichen netzspezifischen Signalisierungsprotokollen SIP (Session Initiation Protocol), BICC (Bearer Independent Call Control), SIP_T (SIP for Telephones) und SS7 (Signalling System No. 7) bewirkt.

An das Netz PSTN_{A} ist ein A-Teilnehmer A, an das Netz PSTN_{B} ein B-Teilnehmer B angeschlossen, zwischen denen als Bearer eine end-to-end Nutzverbindung ISDN_{A}, TDM_{A}, RTP/RTCP, TDM_{B}, ISDN_{B} eingerichtet ist. Die Vergebührung G der Verbindung wird auf der Seite des rufenden A-Teilnehmers im Vermittlungsknoten S_{A} des Netzes PSTN_{A} in üblicher Weise vorgenommen.

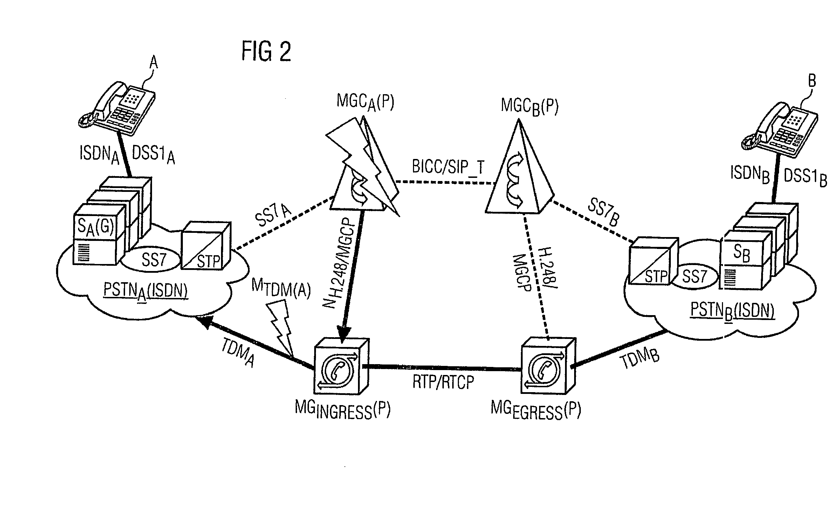

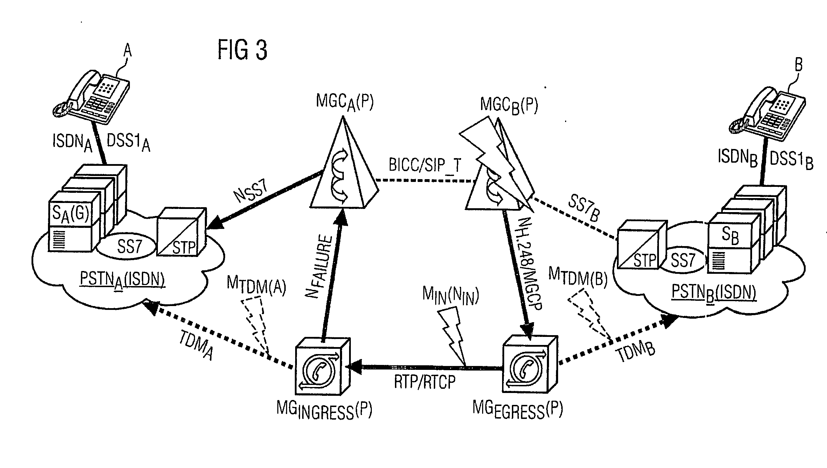

In den Figuren 2 und 3 ist zur vereinfachten Darstellung der Erfindung jeweils nur auf eine uni-direktionale Betrachtung einer end-to-end Verbindung abgestellt, die sich vom rufenden Teilnehmer A zum gerufenen Teilnehmer B aufspannt. In Bezug auf diese Übermittlungsrichtung wird der Gateway MG zwischen dem Netz PSTN_{A} und dem Netz IN als Gateway MG_{INGRESS} und der Gateway MG zwischen dem Netz IN und dem Netz PSTN_{B} als Gateway MG_{EGRESS} bezeichnet, wobei durch den Index 'INGRESS' der Eingang des Nutzverbindung in das Netz IN und durch den Index 'EGRESS' der Ausgang der Nutzverbindung aus dem Netz IN angedeutet wird.

In Figur 2 sind dabei eine Nachricht N_{H.248/MGCP} vom Controller MGC_{A} zum Gateway MG_{INGRESS} und eine Mitteilung M_{TDM} vom Gateway MG_{INGRFSS} zum Netz PSTN_{A} dargestellt, die insbesondere bei Recovery des dem Gateway MG_{INGRESS} zugeordneten Controllers MGC_{A} gemäß der Erfindung übermittelt werden.

In Figur 3 sind dabei Nachrichten NH.248/MGCP vom Controller MGC_{B} zum Gateway MG_{EGRESS}, N_{IN} (als Ausgestaltung einer Mitteilung M_{IN}) vom Gateway MG_{EGRESS} zum Gateway MG_{INGRESS,} N_{FAILURE} vom Gateway MG_{INGRESS} zum Controller MGC_{A}, N_{SS7} vom Controller MGC_{A} zum Netz PSTN_{A}, sowie optionale Mitteilungen M_{TDM} (A) und M_{TDM} (B) von den beiden Gateways MG zu den jeweils per Index angezeigten Netzen PSTN_{A} und PSTN_{B} dargestellt, die insbesondere bei Recovery des dem Gateway MG_{EGRESS} zugeordneten Controllers MGC_{B} gemäß der Erfindung übermittelt werden.

Es sei betont, dass die derart aufgezeigten Ausführungen der Erfindung trotz ihre teilweise sehr detailgetreuen Darstellung von konkreten Netzszenarien lediglich beispielhafter Natur und nicht einschränkend zu verstehen sind. Dem Fachmann ist klar, dass die Erfindung nicht nur bei Virtual Trunking Szenarien, sondern bei allen denkbaren Netzkonfigurationen, insbesondere anderen Interworking Szenarien funktioniert.

Als weitere Ausführungsbeispiele der Erfindung werden das High Level Recovery eines ingress-seitigen Controllers MGC_{A} und eines egress-seitigen Controllers MGC_{B} beispielshaft anhand der in Netzkonfiguration nach Figur 1 erläutert.

Für das Ausführungsbeispiel des High Level Recoveries eines ingress-seitigen Controllers MGC_{A} sind Nachrichten N und Mitteilungen M der Erfindung in Figur 2 dargestellt. Im Laufe eines High Level Recovery des Controllers MGC_{A} werden üblicherweise alle noch bestehenden Verbindungen in dem zugeordneten Gateway MG_{INGRESS} ausgelöst. Diese Verbindungen sind dem Controller MGC_{A} grundsätzlich auch nach einen Recovery noch bekannt, weil sie z.B. in einer Datenbank des Controller (semi-) permanent gespeichert sind, wenn auch mit undefiniertem Zustand, weil z.B. vor oder während des Recovery eine unbekannte Anzahl von Nachrichten vom Gateway MG_{INGRESS} nicht empfangen wurden.

Vom Controller MGC_{A} werden dem Gateway MG_{INGRESS} Steuernachrichten N_{H.248/HGCP} gesendet, mit denen der Gateway MG_{INGRESS} angewiesen wird, alle noch bestehenden Verbindungen auszulösen. Die Nachrichten N_{H.248/HGCP}, die zum Löschen der transienten Call Daten auf dem Gateway MG führen, sind z.B. als Nachricht MGCP:DLCX des IETF Standards MGCP oder als Nachricht H.248:ServiceChange des ITU-T Standards H.248 ausgebildet. Diese Nachrichten werden in diesem Beispiel so erweitert, dass sie dem empfangenden Gateway MG_{INGRESS} die Fehlerursache (d.h. vorliegend das Recovery des Controllers MGC_{A}) anzeigen.

Bei Verwendung des delete Kommandos DLCX des Protokolls MGCP kann z.B. ein wildcard Mechanismus verwendet werden, mit dem bei hierarchischer Namensstruktur der (lokalen) Endpunkte der Verbindungen mit dem wildcard "*" (asterisk) eine Gruppe von Endpunkten angesprochen werden kann (vgl. dazu auch RFC 2705:MGCP, Kapitel 2.3.7). Vorzugsweise umfasst die Gruppe zumindest alle Verbindungen, die über eine bestimmmte Strecke an das Netz PSTN_{A} übermittelt werden, weil so von der Mitteilung M_{TDM} keine bestehenden Verbindungen deaktiviert werden. Das Kommando DLCX wird durch einen zusätzlichen Parameter "reason code" ergänzt, der eindeutig anzeigt, dass im Controller MGC das hier beschriebene Recovery Szenario vorliegt.

Bei Verwendung des Kommandos ServiceChange des Protokolls H.248 können z.B. die Parameterwerte TerminationID = Root, ServiceChangeMethod = Forced benutzt werden. Das Kommando ServiceChange mit dem Parameterwert ServiceChangeMethod = Forced ist nach Standard H.248 lediglich als Nachricht vom Gateway MG zum Controller MGC vorgesehen. Die Benutzung dieses Kommandos in der umgekehrten Richtung, d.h. vom Controller MGC zum Gateway MG, stellt eine Erweiterung des Standards dar. Sofern sie speziell für die Recovery Szenarien reserviert wird, ist in der Reservierung als solchen die Anzeige der Fehlerursache enthalten, so dass vorteilhaft auf einen separaten Parameter zur Anzeige der Fehlerursache verzichtet werden kann.

Der Gateway MG_{INGRESS} löst nach Empfang der Steuernachrichten H_{H.248/MGCP} entsprechend der standardkonformen Reaktionen die angezeigte(n) Verbindung(en) in deren Kontext aus. Zusätzlich lässt er als Reaktion auf die angezeigte Fehlerursache die zugehörigen PCM Strecken physikalisch ausfallen und aktiviert sie nach einer gewissen Zeitspanne wieder, die so bemessen ist, dass die Hardware Maintenance gängiger TDM Vermittlungsknoten S auf der Gegenseite den Ausfall bemerken und anzeigen. Als Folge werden darauf in üblicher Weise die Bearer ISDN_{A}, TDM_{A} im Netz PSTN_{A} ausgelöst und die Vergebührung G zeitnah zu der Unterbrechung der end-to-end Verbindung gestoppt.

Für das Ausführungsbeispiel des High Level Recovery eines egress-seitigen Controllers MGC_{B} sind Nachrichten N und Mitteilungen M der Erfindung in Figur 3 dargestellt. Dabei werden alle noch bestehenden Verbindungen in dem zugeordneten Gateway MG_{EGRESS} ausgelöst, wobei angenommen wird, dass dies dem Gateway MG_{EGRESS} vom Controller MGC_{B} mit Steuernachrichten H_{H}._{248/MGCP} entsprechend dem ingress-seitigen Ausführungsbeispiel angezeigt wird.

Der Gateway MG_{EGRESS} löst nach Empfang der Steuernachrichten H_{H}._{248/MGCP} entsprechend der standardkonformen Reaktionen die angezeigte(n) Verbindung(en) in deren Kontext aus. Zusätzlich wird als Reaktion auf die angezeigte Fehlerursache dem Gateway MG_{INGRESS} das Auslösen der Verbindung(en) auf der Resource Control Ebene RCL mitgeteilt. Diese Mitteilung M_{IN} wird z.B. für alle den ausgelösten Verbindungen zugehörigen Bearerstreams RTP durch spezielle Nachrichten N_{IN} bewirkt, die z.B. als Pakete RTCP mit einem Parameterwert Packet Loss = 100 % ausgebildet sind. Dies erfolgt möglichst zeitnah zum Auslösen der Verbindungen. Vorteilhaft wird das Aussenden der Nachrichten N_{IN} geglättet, um Nachrichtenfluten zu vermeiden.

Das Gateway MG_{INGRESS} teilt seinerseits nach überschreiten eines Schwellwerts von empfangenen Nachrichten N_{IN} dem vorgeschalteten PSTN_{A} den Ausfall der Verbindung mit. Gemäß einer Variante der Erfindung wird diese Mitteilung M_{TDM} (A) auf der Resource Control Ebene RCL bewirkt, indem z.B. die zugehörigen PCM Strecken zum Netz PSTN_{A} kurzzeitig deaktiviert werden. Gemäß einer alternativen Variante der Erfindung wird die Mitteilung auf der Call Control Ebene CCL bewirkt. Hierzu wird dem Controller MGC_{A} von dem Gateway MG_{INGRESS} mit Nachrichten N_{FAILURE} der anhand der Nachrichten N_{IN} erkannte Ausfall der Verbindungen mitgeteilt, worauf dieser Ausfall vom Controller MGC_{A} in üblicher Weise mit Signalisierungsnachrichten N_{SS7} dem Netz PSTN_{A} mitgeteilt wird. Nach Erhalt dieser Mitteilung werden im Netz PSTN_{A} darauf in üblicher Weise die Bearer ISDN_{A}, TDM_{A} im Netz PSTN_{A} ausgelöst und die Vergebührung G zeitnah zu der Unterbrechung der end-to-end Verbindung gestoppt.

Optional wird von dem Gateway MG_{EGRESS} das Auslösen der Verbindungen auch in Vorwärtsrichtung auf der Resource Control Ebene RCL mitgeteilt. Diese Mitteilung M_{TDM} (B) kann bei Zusammenschaltung mit nachgeordneten Netz PSTN_{B} wiederum durch physikalisches Deaktivieren der Übermittlungsstrecken bewirkt werden. Vorteilhaft werden so die Bearer TDM_{B}, ISDN_{B} zeitnah zu dem Ausfall der Verbindungen in dem Netz PSTN_{B} für Neubelegungen freigeschaltet. Dieser Vorteil ist besonders schön, wenn die übliche Freigabe auf der Call Control Ebene CCL infolge des Recovery des Controllers MGC_{B} nicht oder nur verzögert bewirkt werden kann.

Dem Fachmann ist klar, dass die Erfindung nicht nur bei den Virtual Trunking Szenarien, bei denen der Controller MGC_{A} des ingress-seitigen MG_{INGRESS} bzw. der Controller MGC_{B} des egress-seitigen Gateway MG_{EGRESS} ein High Level Recovery durchläuft, sondern bei allen denkbaren Netzkonfigurationen, insbesondere allen Interworking Szenarien wie TDM < > IP phone oder TDM <-> Access Gateway funktioniert, v.a. wenn der Ausfall des IP Bearers RTP in den Ausfall der (über den Virtual Trunking Gateway MG) zugehörigen PCM Strecken umgesetzt wird. Der Ausfall der Nutzkanäle wird so in allen Fällen unverzüglich ins Netz signalisiert, d.h. ohne Verzögerung durch das Recovery des Controllers MGC.

Weiterhin ist dem Fachmann klar, dass sich die beiden beschriebenen Szenarien natürlich bei einer bi-direktionalen Verbindung ohne weiteres überlagern können, d.h. dass beispielsweise bei einem Gateway MG_{INGRESS} nicht nur eine Mitteilung M_{TDM} in Richtung des PSTN_{A}, sondern parallel dazu auf der Gegenrichtung - d.h. der Übermittlungsrichtung von Teilnehmer B zu Teilnehmer A (bezüglich der das Gateway MG_{INGRESS} dann einen EGRESS darstellt) - auch zusätzlich eine Mitteilung MIX in Richtung des Gateways MG_{EGRESS} ausgelöst werden kann.

Abschließend sei darauf hingewiesen, dass die Beschreibung der für die Erfindung relevanten Komponenten des Kommunikationsnetzes grundsätzlich nicht einschränkend zu verstehen ist. Für einen einschlägigen Fachmann ist insbesondere offensichtlich, dass Begriffe wie Applikation, Client, Server, Gateway, Controller, etc... funktional und nicht physikalisch zu verstehen sind. Somit können beispielsweise die Endpunkte A, B auch teilweise oder vollständig in Software / Computerprogrammprodukten P und/oder über mehrere physikalische Einrichtungen verteilt realisiert werden.

## Patentansprüche

1. Verfahren zum Auslösen einer Verbindung in einem Kommunikationsnetz (IN) mit
- einer Call Control Ebene (CCL), der ein Media Gateway Controller (MGC) zugeordnet ist;
- einer Resource Control Ebene (RCL), der ein von dem Controller gesteuertes und als separate Einheit realisiertes Media Gateway (MG) zugeordnet ist;
mit folgenden Schritten:
- Senden der Steuernachricht vom Controller zum Gateway;
- Auslösen der Verbindung im Gateway;
- Mitteilung des Auslösens an zumindest einen Netzknoten (S_{A}, MG_{INGRESS}) entlang der Verbindung, wobei die Mitteilung (M) auf der Resource Control Ebene bewirkt wird;
- **dadurch gekennzeichnet, dass** das Kommunikationsnetz über das Gateway mit einem leitungsorientierten Netz (PSTN) zusammengeschaltet ist, zumindest einer der Netzknoten ein Vermittlungsknoten (S_{A}) des leitungsorientierten Netzes ist und die Mitteilung (M_{TDM}) durch Ausfall eines Übermittlungskanals zwischen dem Gateway und dem Vermittlungsknoten bewirkt wird.

2. Verfahren nach Anspruch 1, bei dem das Kommunikationsnetz als paketorientiertes Netz - insbesondere als integriertes Sprach-Daten-Netz (SDN) - ausgebildet ist.

3. Verfahren nach dem vorstehenden Anspruch, bei dem die Zeitdauer des Ausfalls so bemessen ist, dass die Hardware Überwachung des Vermittlungsknotens den Übermittlungskanal als ausgefallen meldet.

4. Verfahren nach einem der vorstehenden Ansprüche, bei dem zumindest einer der Netzknoten ein zweites Gateway (MG_{INGRESS}) ist und die Mitteilung (M_{IN}) durch Senden von speziellen Nachrichten (N_{IN}) - insbesondere durch Senden von RTCP Paketen, mit denen eine Information "Packet Loss = 100 %" angezeigt wird - vom ersten Gateway (MG_{EGRESS}) zum zweiten Gateway bewirkt wird.

5. Verfahren nach dem vorstehenden Anspruch, bei dem das zweite Gateway nach Überschreiten eines Schwellwertes von derartigen speziellen Nachrichten seinerseits zumindest einem weiteren Netzknoten (S_{A}), der nicht identisch ist mit dem ersten Gateway, das Auslösen der Verbindung mitteilt, wobei diese Mitteilung insbesondere von dem zweiten Gateway (MG_{INGRESS}) an seinen zugeordneten Controller (MG_{A}) und von diesem auf der Call Control Ebene zu dem weiteren Netzknoten (S_{A}) übermittelt wird.

6. Verfahren nach einem der vorstehenden Ansprüche, bei dem die Steuernachricht auf Grund eines Recovery des Controllers gesendet wird.

7. Vorrichtung, insbesondere Controller (MGC) oder Gateway (MG), umfassend Mittel zur Durchführung eines Verfahrens nach einem der vorstehenden Verfahrensansprüche.

8. Anordnung, insbesondere paketorientiertes Netz (IN), integriertes Sprach-Daten-Netz (SDN) oder hybrides Netz (IN, PSTN), umfassend eine Vorrichtung zur Durchführung eines Verfahrens nach einem der vorstehenden Verfahrensansprüche.

## Claims

1. Method for releasing a connection in a communications network (IN) with
- a Call Control Level (CCL), to which a Media Gateway Controller (MGC) is assigned;
- a Resource Control Level (RCL), to which a Media Gateway (MG) controlled by the controller and implemented as a separate unit is assigned;
with the following steps:
- transmission of the control message from the controller to the gateway;
- release of the connection in the gateway;
- notification of the release to at least one network node (S_{A}, MG_{INGRESS}) along the connection, whereby the notification (M) is effected at the Resource Control Level;
**characterized in that**
- the communications network is interconnected via the gateway with a circuit-oriented network (PSTN), at least one of the network nodes is a switching node (S_{A}) of the circuit-oriented network, and the notification (M_{TDM}) is effected through failure of a transmission channel between the gateway and the switching mode.

2. Method according to claim 1, in which the communications network is designed as a packet-oriented network, in particular as an integrated voice-data network (SDN).

3. Method according to the preceding claim, in which the duration of the failure is defined in such a way that the hardware monitoring of the switching node reports the transmission channel as having failed.

4. Method according to one of the preceding claims, in which at least one of the network nodes is a second gateway (MG_{INGRESS}) and the notification (M_{IN}) is effected by the transmission of special messages (N_{IN}), in particular by the transmission of RTCP packets, with which the information "Packet Loss = 100%" is indicated, from the first gateway (MG_{EGRESS}) to the second gateway.

5. Method according to the preceding claim, in which, once a threshold value of special messages of this type has been exceeded, the second gateway in turn notifies the release of the connection to at least one further network node (S_{A}), which is not identical to the first gateway, whereby this notification is transmitted from the second gateway (MG_{INGRESS}) to its assigned controller (MG_{A}) and from the latter at the Call Control Level to the further network node (S_{A}).

6. Method according to one of the preceding claims, in which the control message is transmitted due to a recovery of the controller.

7. Device, in particular controller (MGC) or gateway (MG), comprising means to carry out a method according to one of the preceding method claims.

8. Arrangement, in particular packet-oriented network (IN), integrated voice-data network (SDN) or hybrid network (IN, PSTN), comprising a device to carry out a method according to one of the preceding method claims.

## Revendications

1. Procédé pour déconnecter une liaison dans un réseau de communication (IN) avec
- une couche de contrôle d'appel (CCL) à laquelle est associé un contrôleur de passerelles média (MGC),
- une couche de contrôle de ressources (RCL) à laquelle est associée une passerelle média (MG) commandée par le contrôleur et réalisée sous la forme d'une unité séparée,
comprenant les étapes suivantes:
- envoi du message de commande du contrôleur à la passerelle,
- déconnexion de la liaison dans la passerelle,
- communication de la déconnexion à au moins un noeud de réseau (S_{A}, MG_{INGRESS}) le long de la liaison, la communication (M) étant provoquée sur la couche de contrôle des ressources,
**caractérisé en ce que** le réseau de communication est interconnecté avec un réseau orienté ligne (PSTN) via la passerelle, au moins l'un des noeuds de réseau est un noeud de commutation (S_{A}) du réseau orienté ligne et la communication (M_{TDM}) est provoquée par la défaillance d'un canal de transmission entre la passerelle et le noeud de commutation.

2. Procédé selon la revendication 1, dans lequel le réseau de communication se présente sous la forme d'un réseau orienté paquets, en particulier d'un réseau vocal et de données intégré (SDN).

3. Procédé selon la revendication précédente, dans lequel la durée temporelle de la défaillance est telle que la surveillance hardware du noeud de commutation signale le canal de transmission comme défaillant.

4. Procédé selon l'une des revendications précédentes, dans lequel au moins l'un des noeuds de réseau est une deuxième passerelle (MG_{INGRESS}) et la communication (M_{IN}) est provoquée par l'envoi de messages spéciaux (N_{IN}), en particulier par l'envoi de paquets RTCP à l'aide desquels est indiquée une information «Packet Loss = 100 %», de la première passerelle (MG_{EGRESS}) vers la deuxième passerelle.

5. Procédé selon la revendication précédente, dans lequel la deuxième passerelle, après le dépassement d'une valeur seuil de tels messages spéciaux, de son côté, communique la déconnexion de la liaison au moins à un autre noeud de réseau (S_{A}) qui n'est pas identique à la première passerelle, cette communication étant transmise en particulier de la deuxième passerelle (M_{INGRESS}) à son contrôleur associé (MG_{A}) et, de celui-ci, sur la couche de contrôle d'appel, vers l'autre noeud de réseau (S_{A}).

6. Procédé selon la revendication précédente, dans lequel le message de commande est émis sur la base d'une récupération du contrôleur.

7. Dispositif, en particulier contrôleur (MGC) ou passerelle (MG), comprenant des moyens pour exécuter un procédé selon l'une des revendications précédentes.

8. Ensemble, en particulier réseau orienté paquets (IN), réseau vocal et de données intégré (SDN) ou réseau hybride (IN, PSTN), comprenant un dispositif pour exécuter un procédé selon l'une des revendications précédentes.
